# EUROPEAN PATENT SPECIFICATION

(11) **EP 1 460 392 B1**
(45) Date of publication and mention of the grant of the patent: **22.11.2006**
(21) Application number: 04075689.2
(22) Date of filing: 02.03.2004
(51) Int. Cl.: G01F 1/10, G01F 15/18

(54) **Turbine mass flow meter**
Turbinendurchflussmesser
Débitmètre à turbine

(30) Priority: 18.03.2003 NL 1022963
(43) Date of publication of application: 22.09.2004
(73) Proprietor: Elster-Instromet B.V., 7064 KA Silvolde (NL)
(72) Inventor: Bergervoet, Josephus T. M., 7061 XE Terborg (NL)
(74) Representative: De Hoop, Eric

(56) References cited:
- US-A- 4 463 613
- US-A- 4 719 807
- US-A- 5 473 932
- US-A1- 2001 054 320

## Description

The invention relates to a turbine meter for measuring a flow of a fluid in a pipe, particularly for measuring the flow rate of a gas flowing through a pipe.

Such a turbine meter is provided with a circle-symmetrical measuring insert which by means of spokes is mounted axially in a tubular meter housing, for forming an annular flow channel between the measuring insert and the inner wall of the tubular meter housing. The measuring insert comprises an impeller that is mounted such that the blades are situated in the annular flow channel.

US patent 4.719.807 describes a turbine meter comprising a meter housing which at the side is provided with an opening through which the internal mechanism of the turbine meter can be taken out of the meter housing for exchange or calibration outside the meter housing. The internal mechanism of the turbine meter comprises a measuring portion and a flow director which can be placed in the meter housing independent from each other. The length of the measuring portion and of the flow director are smaller than the opening in the meter housing. When placing the internal mechanism in the meter housing, first the flow director is inserted into the meter housing via the opening and subsequently it is slid in an upstream portion of the meter housing so that the opening is no longer obstructed and the measuring portion can subsequently be placed in it. After placing the measuring portion the flow director and the measuring portion connect to each other for forming the turbine meter.

US patent 5.473.932 describes a turbine meter comprising a meter housing comprising two independent rotors, in close proximaty of each other, but isolated from the effects of each other. The rotors are placed in a meter housing with a bearing block upstream of the impeller as shown in figure 7A in this US patent.

Known turbine meters, such as for instance described in US patent 4.719.807, require a relative large built-in length. This may result in problems when the known turbine meter has to be built in into an existing pipe, and wherein the existing pipe cannot sufficiently be moved to mount the turbine meter.

It is an object of the present invention to improve on this.

From a first aspect the invention provides a turbine meter for measuring a flow of a fluid in a pipe, wherein the turbine meter comprises a meter housing which, considered in axial direction of the meter housing, comprises a first part and a second part, characterized in that the first part is adapted for inserting it in the pipe and the second part circumferential comprises a casing for interposing between an upstream pipe and a downstream pipe for connection to and sealing of the pipe.

As the first part of the meter housing of the turbine meter according to the invention is inserted into the pipe during mounting, the built-in length to be inserted can be considerably reduced. The built-in length in the turbine meter according to the invention is only determined by the length of the second part, of which the casing in built-in condition connects to the pipe and is placed or clamped between an upstream and downstream pipe portion or between flanges of these pipe portions. Preferably the casing is adapted for connecting to a raised face of the pipe. For sealing, gaskets may furthermore be placed between the casing of the second part and the pipe portions or their flanges.

Preferably the meter housing can be divided into the first part and the second part. This is particularly advantageous when building in the turbine meter, because the separate parts of the meter housing can be placed in the pipe independent from each other, and subsequently be connected to each other again. The opening in the pipe has to be large enough to first place the first part and then the second part individually. When building in into an existing pipe it has to be moved less far. The moved distance now only has to be sufficiently large to be able to place the larger part of the two.

Preferably the dividable meter housing comprises placement means and/or positioning means for placing and/or positioning the first part and the second part with respect to each other.

In an embodiment the first part is provided with a flange oriented radially to the outside for connection to a side of the casing of the second part, which side faces the first part. Said flange forms a connection between the first and second part and may, just like the casing of the second part, be placed or clamped between the pipe parts.

Preferably the casing of the second part at a side facing the first part, comprises a concentric recess for accommodating the flange of the first part. By placing the flange oriented radially to the outside in the concentric recess, the first part and the second part can be positioned with respect to each other.

Preferably the depth and the width of the recess are almost equal to the thickness and the width, respectively, of the flange for forming one closed flat surface against which a gasket may connect, so that a better sealing with the pipe or with the flange of the pipe can be achieved.

In an embodiment of the turbine meter, the first part at an inner side is provided with at least a part of a flow director, and the second part at an inner side is provided with a measuring insert comprising an impeller.

Preferably the measuring insert is placed axially in the meter housing by means of flow directing blades, wherein the blades are formed as one unity with the measuring insert and the second part of the meter housing. The blades form the downstream part of the flow director. By placing this part of the flow director in the second part of the meter housing, the blades, besides for eliminating eddies, can also be used for connecting the measuring insert and the meter housing. As a result a firm structure is achieved which can be designed in a compact way.

In an embodiment of the turbine meter according to the invention, the measuring insert comprises a bearing block for the impeller, wherein the bearing block is situated upstream of the impeller. As a result the bearing block does not protrude behind the impeller, and the turbine meter can be made shorter.

In a further embodiment the first part of the meter housing further comprises a displacement body that is placed axially in the meter housing, and which at an upstream side thereof connects to the flow director, and at a downstream side thereof connects to the measuring insert. Preferably the displacement body is connected to the flow director. The displacement body ensures a guiding of the fluid flow to the annular flow channel between the measuring insert and the inner wall of the tubular meter housing.

Preferably the displacement body near the end connecting to the measuring insert comprises a step oriented radially to the outside. The step ensures narrowing of the flow channel that is not streamlined so that sufficient impulse exchange with the fluid flow takes place. As a result the flow profile in the flow channel is further homogenised.

In an embodiment of the turbine meter according to the invention, an axial length of the first part almost equals an axial length of the second part. The axial length here means the length in axial direction of the pipe. The built-in length of this embodiment therefore almost equals half the length of the meter housing. When the meter housing can be divided, the pipe only has to be moved over approximately half the length of the meter housing when building in into an existing pipe.

Preferably the length of the second part of the meter housing is smaller than or equal to the diameter of the passage of the pipe. Preferably the length of the second part of the meter housing is smaller than or is equal to half an outer diameter of the first part of the meter housing.

From a second aspect the invention provides a turbine meter for measuring a flow of a fluid in a pipe, wherein the turbine meter comprises a meter housing which at the inner side is provided with a measuring insert comprising an impeller, wherein the measuring insert is placed axially in the meter housing by means of flow directing blades and wherein the blades are formed as one unity with the measuring insert and the meter housing.

From a third aspect the invention provides a turbine meter for measuring a flow of a fluid in a pipe, wherein the turbine meter comprises a meter housing which at the inner side is provided with a measuring insert comprising an impeller, wherein the measuring insert comprises a bearing block for the impeller, which bearing block is situated upstream of the impeller.

From a fourth aspect the invention provides a pipe comprising a turbine meter as described above.

The invention will be elucidated on the basis of an exemplary embodiment shown in the attached drawings, in which:
Figure 1 shows a perspective view of a turbine meter according to the invention;
Figure 2 shows a perspective cross-sectional view of the turbine meter of figure 1;
Figure 2A shows an enlarged part view of figure 2;
Figures 3, 4 and 5 show the placing of the turbine meter of figure 1 in a pipe; and

Figures 6A and 6B show a schematic view of a built-in situation with limited liberty for moving the pipes.

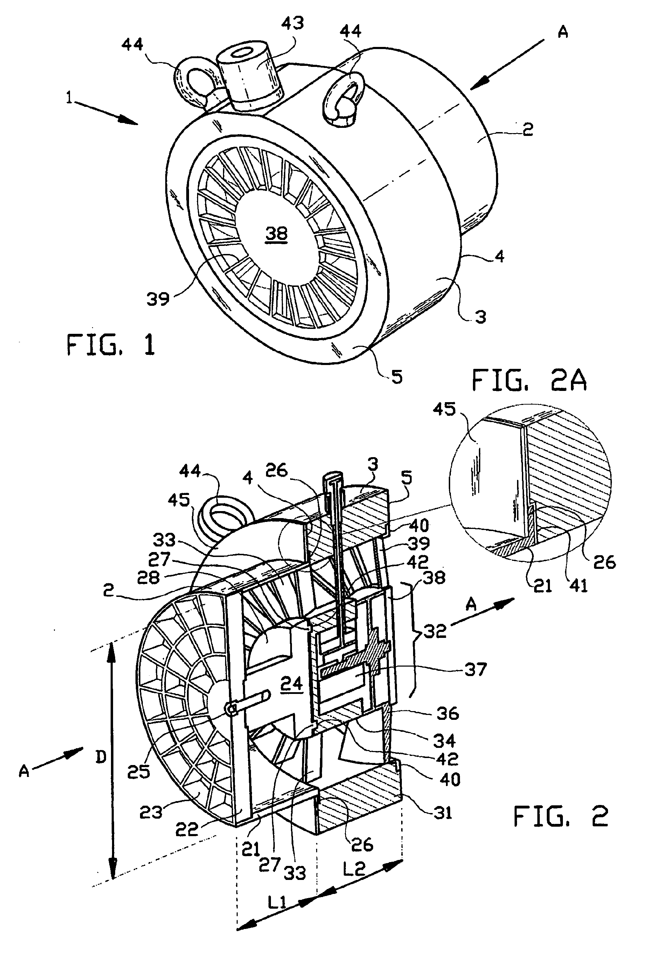

The turbine meter according to the exemplary embodiment as shown in figure 1, comprises, when considered in flow direction A, a first part 2 having a small diameter, and a second part 3 having a diameter that is larger than the diameter of the first part 2. The diameter of the first part 2 is almost equal to the inner diameter of a pipe in which the turbine meter has to be placed, so that this first part 2 can be inserted into the pipe. The diameter of the second part 3 is such that an upstream edge 4 and a downstream edge 5 connect to the pipe in which the turbine meter has to be placed. The edges 4, 5 also serve for sealing the pipe (not shown).

The further construction of the turbine meter 1 according to figure 1 will be further discussed on the basis of figure 2. The first part 2 of the turbine meter 1 comprises a casing 21 which at its upstream ends is provided with a first part of a flow director 22. The first part of the flow director 22 is provided with the known X4X-square holes. The first part 2 comprises a displacement body 24 which by means of a screw attachment 25 is axially connected to the first part of the flow director 22. The casing of the first part 2 has a diameter D which is almost equal to the inner diameter of the pipe on which the turbine meter has to be placed. At the location where the first part 2 connects to the second part 3 of the turbine meter, the first part 2 is provided with an outwardly oriented flange 26. At a side facing the second part of the meter housing the displacement body 24 is furthermore provided with projecting parts 27.

The flange 26 and the projecting parts 27 of the first part 2 of the meter housing, fit into recesses in the second part 3 of the meter housing for correct positioning and placing the first part 2 and the second part 3 with respect to each other.

The second part 3 of the meter housing has a casing 31 of which an upstream side 4 and a downstream side 5 are adapted for connecting to a raised face of the pipe. The casing 31 and a measuring insert 32 placed axially in the meter housing, are connected to each other by means of blades 33. In this embodiment the casing 31, the blades 33 and the housing of the measuring insert 34 are formed as one unity. This unity of the meter housing is for instance milled out of one block of aluminium. In the housing of the measuring insert 34 a bearing block 37 is placed for the impeller. The impeller 36 is placed downstream of the bearing block 37. The unity is covered at the downstream end by a plate 38 with spokes 39, wherein the spokes 39 serve as placement means and positioning means. The plate 38 is further provided with a radially extending edge 40 for building up a pressure at the downstream side of the centre section of the impeller 36. The edge 40 balances the axial forces exerted on the impeller 36.

At the upstream side of the second part 3 of the meter housing, the side 4 is provided with a recess 41 for accommodating the flange 26 of the first part 2 of the meter housing as shown in figure 2A. In a comparable manner the upstream side of the housing of the measuring insert 34 is provided with recesses 42 for accommodating the projecting parts 27 of the displacement body 24.

In this exemplary embodiment the second part 3 is provided with an inductively operating approach sensor which translates the rotation of the impeller into a periodical electric signal of which the frequency is a measure for the number of revolutions of the impeller. This approach sensor 43 is placed in the casing 31 of the second part 3 of the meter housing and extends near the outer circumference of the impeller 36. Alternatively it is also possible that a mechanical construction is used which transfers the rotation of the impeller to a mechanical counter mounted on the meter housing.

Furthermore the second part 3 of the meter housing of this exemplary embodiment is provided with the lifting hooks 44 with which the turbine meter can be coupled to a lifting device for placing it with ease.

It is also preferred that during the mounting of the turbine meter, a gasket 45, 46 is placed between the casing 31 of the second part 3 of the meter housing and the raised faces of the pipe.

The displacement body 24 is furthermore provided with a step 28 that is oriented radially to the outside.

When the space for building in the turbine meter permits it said turbine meter can be placed as a whole. When placing it the first part 2 of the meter housing will be inserted into the pipe until the casing 31 of the second part 3 of the meter housing connects to the raised face of the pipe. Subsequently the raised face of the downstream pipe portion is placed against the downstream end of the turbine meter 1 via a gasket. Subsequently the flanges of the upstream pipe portion and the downstream pipe portion are connected to each other by means of a screw connection that extends over the second part 3 of the turbine meter 1.

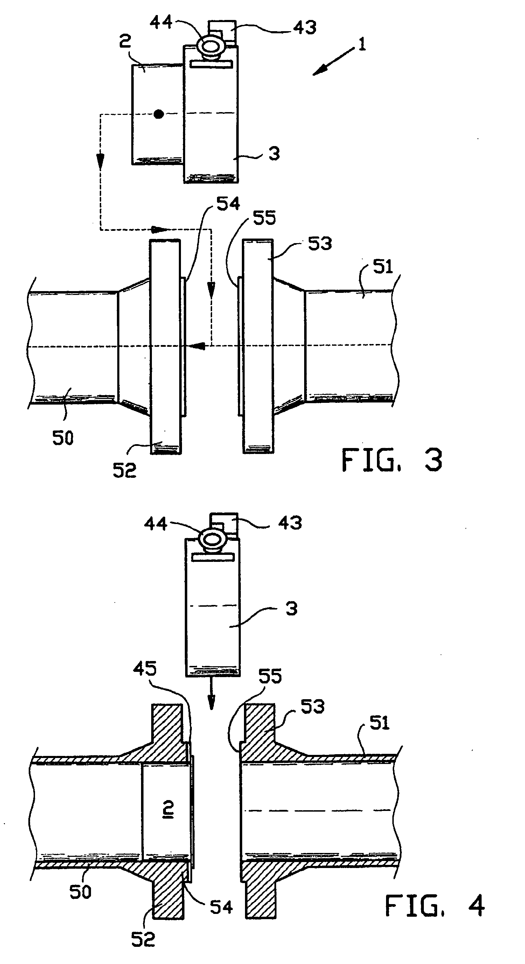

When the pipes cannot be sufficiently moved to place the turbine meter as a whole, use can be made of a dividable meter housing, wherein the first part 2 can be placed separately from the second part 3. The first part 2 has a length L₁ and the second part has a length L₂. The built-in space has to be sufficiently large to be able to accommodate both the first part 2, and after that the second part 3 in the pipes. Preferably the lengths L₁, L₂ of both parts 2, 3 are almost equally long. In this case the pipes only have to be moved over a distance that is slightly larger than L₁ for building in this dividable flow meter. Preferably the length of the part 3 that comprises the measuring insert is smaller than or equal to the diameter of the pipe D, preferably smaller than or equal to half a diameter of the pipe. The placing of such a dividable turbine meter is schematically shown in figures 3, 4 and 5.

Figure 3 shows the turbine meter of figures 1 and 2 near a pipe comprising an upstream pipe portion 50 and a downstream pipe portion 51. At their ends both pipe portions 50, 51 are provided with a flange 52, 53 and a raised face 54, 55, respectively. For mounting the dividable turbine meter 1 first the first part 2 is placed in the upstream pipe portion 50. First a gasket 45 is placed against the raised face 54 of the upstream pipe portion, as shown in figure 4. Subsequently the first part 2 of the meter housing is inserted into the upstream pipe portion 50, so that the flange that is oriented radially to the outside of the first part 2 of the meter housing abuts the gasket 45. Subsequently the second part 3 of the meter housing can be inserted between the pipes 50, 51, as shown in figure 4.

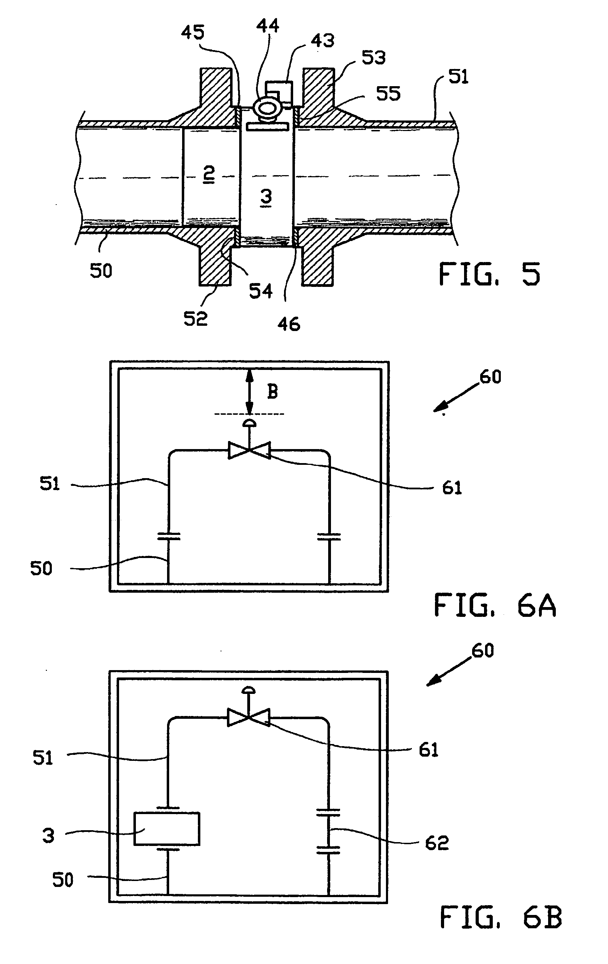

In figure 5 the second part 3 of the meter housing is placed in the pipe 50, 51. The casing of the second part 3 of the meter housing, at the upstream side connects to the gasket 45 and the flange 26, respectively, and at the downstream side to the gasket 46. The turbine meter 1 now is in assembled condition again, and may, provided with the gaskets 45, 46 be clamped in between the upstream pipe portion 50 and the downstream pipe portion 51. To that end the flanges 52 and 53 are connected to each other by means of a screw connection.

It is clear that, as shown in the figures 3, 4 and 5, the pipe portions 50, 51 only need to be moved over a short distance to be able to place this turbine meter 1 in the pipes 50, 51; a distance that is shorter than the length of the turbine meter 1.

This is particularly advantageous for placing a turbine meter in an existing pipe such as for instance shown in figures 6A and 6B. These figures show a U-bend which is accommodated in a case 60, wherein the horizontal leg of the U-bend is moreover provided with a valve 61, due to which the U-bend can no longer be moved sufficiently to mount a known meter. The available space B in vertical sense was merely approximately half an inner diameter of the pipe 50, 51. The dividable turbine meter could indeed be placed wherein only the second part 3 of the housing defines the built-in length. At the other side of the U-bend a filling piece 62 is placed, as shown in figure 6B.

It will be clear that the exemplary embodiments of the invention described above, are meant to illustrate the invention and not to limit the invention. An expert in the field will certainly be capable of designing alternative embodiments that fall within the scope of protection of the attached claims.

For instance the turbine meter according to the exemplary embodiment is dividable into two parts. However the meter housing may also be dividable into more than two parts. For instance the meter housing considered in flow direction, may comprise a first, second and third part, wherein the first and third part are adapted for insertion thereof in an upstream and downstream part, respectively, of the pipe and wherein the second part at its circumference comprises a casing for connecting to and sealing the pipe.

## Claims

1. Turbine meter (1) for measuring a flow of a fluid in a pipe (50,51), wherein the turbine meter (1) comprises a meter housing which, considered in axial direction of the meter housing, comprises a first part (2) and a second part (3), **characterized in that** the first part (2) is adapted for inserting it in the pipe (50) and the second part (3) comprises a circumferential casing (31) for interposing between an upstream pipe (50) and a downstream pipe (51) for connection to and sealing of the pipe.

2. Turbine meter according to claim 1, wherein the casing (31) is adapted for connecting to a raised face (54,55) of the pipe (50,51).

3. Turbine meter according to claim 1 or 2, wherein the meter housing can be divided into the first part (2) and the second part (3)

4. Turbine meter according to claim 3, wherein the meter housing comprises placement means (26,41) and/or positioning means (27,42) for placing and/or positioning the first part (2) and the second part (3) with respect to each other.

5. Turbine meter according to claim 3 or 4, wherein the first part (2) is provided with a flange (26) oriented radially to the outside for connection to a side (4) of the casing (31) of the second part (3) which side faces the first part (2).

6. Turbine meter according to claim 5, wherein the casing (31) of the second part (3) at a side (4) facing the first part (2) comprises a concentric recess (41) for accommodating the flange (26) of the first part (2), wherein the depth and the width of the recess (41) are preferably almost equal to respectively the thickness and the width of the flange (26)

7. Turbine meter according to any one of the preceding claims, wherein the first part (2) at an inner side is provided with at least a part of a flow directory (22), and wherein the second part (3) at an inner side is provided with a measuring insert (32) comprising an impeller (36).

8. Turbine meter according to claim 7, wherein the measuring insert (32) is placed axially in the meter housing by means of flow directing blades (33), wherein the blades (33) are formed as one unity with the measuring insert (32) and the second part (3) of the meter housing, wherein the measuring insert (32) preferably comprises a bearing block (37) for the impeller (36), wherein the bearing block (37) is situated upstream of the impeller (36).

9. Turbine meter according to claim 7 or 8, wherein the first part (2) of the meter housing further comprises a displacement body (24) that is placed axially in the meter housing, and which at an upstream side thereof connects to the flow director (22) and at a downstream side thereof connects to the measuring insert (32), wherein the displacement body (24) preferably near the end connecting to the measuring insert (32) comprises a step (28) oriented radially to the outside, and wherein the displacement body (24) preferably is attached to the flow director (22).

10. Turbine meter according to any one of the preceding claims, wherein an axial length (L1) of the first part (2) almost equals an axial length (L2) of the second part (3) and wherein the length of the second part (3) of the meter housing preferably is smaller than or equal to the diameter of the passage of the pipe (50,51).

11. Pipeline assembly comprising a pipe (50) and a turbine meter (1) for measuring a flow of a fluid in the pipeline, wherein the turbine meter (1) comprises a meter housing which considered in axial direction of the meter housing comprises a first part (2) and a second part (3), wherein the first part is inserted in the pipe (50) and the second part (3) at its circumference comprises a casing (31) which is interposed between the pipe (50) and a subsequent pipe (51) for connecting and sealing the pipeline.

12. Pipeline assembly according to claim 11, wherein the casing (31) comprises a circumferential upstream edge (4) and a circumferential downstream edge (5), wherein the upstream edge (4) is connected to a raised face (54) of the pipe (50) and the downstream edge (5) is connected to a raised face (55) of the subsequent pipe (51), preferably via a gasket (45, 46).

## Patentansprüche

1. Turbinenmeßgerät (1) zum Messen einer Strömung eines Fluidums in einem Rohr (50,51), wobei das Turbinenmeßgerät (1) ein Meßgerätgehäuse umfaßt, welches, in Axialrichtung des Meßgerätgehäuses betrachtet, ein erstes Teil (2) und ein zweites Teil (3) umfaßt, **dadurch gekennzeichnet, daß** das erste Teil (2) zum ins Rohr (50) Einschieben eingerichtet ist und das zweite Teil (3) einen umlaufenden Mantel (31) umfaßt zum zwischen einem stromaufwärts gelegenen Rohr (5) und einem stromabwärts gelegenen Rohr Stellen für Anschluß am und Dichtung vom Rohr.

2. Turbinenmeßgerät nach Anspruch 1, wobei der Mantel zum Verbinden an einer erhöhten Dichtungsfläche (54,55) des Rohrs (50,51) eingerichtet ist.

3. Turbinenmeßgerät nach Anspruch 1 oder 2, wobei das Meßgerätgehäuse in das erste Teil (2) und das zweite Teil (3) zu teilen ist.

4. Turbinenmeßgerät nach Anspruch 3, wobei das Meßgerätgehäuse Aufstellungsmittel (26,41) und/oder Positionierungsmittel (27,42) zum Aufstellen und/oder Positionieren des ersten Teils (2) und des zweiten Teils (3) zueinander umfaßt.

5. Turbinenmeßgerät nach Anspruch 3 oder 4, wobei das erste Teil (2) mit einem radial nach außen gerichteten Flansch (26) für Anschluß an einer auf das erste Teil (2) gerichteten Seite (4) des Mantels (31) des zweiten Teils (3) versehen ist.

6. Turbinenmeßgerät nach Anspruch 5, wobei der Mantel (31) des zweiten Teils (3) an einer auf das erste Teil (2) gerichteten Seite (4) eine konzentrische Aussparung (41) zum Aufnehmen des Flansches (26) des ersten Teils (2) umfaßt, wobei die Tiefe und die Breite der Aussparung (41) vorzugsweise nahezu gleich sind an beziehungsweise der Dicke und der Breite des Flansches (26).

7. Turbinenmeßgerät nach einem der vorhergehenden Ansprüche, wobei das erste Teil (2) an einer Innenseite mit zumindest einem Teil eines Stromrichters (22) versehen ist, und wobei das zweite Teil (3) an einer Innenseite mit einem Meßeinsatz (32) versehen ist, welcher ein Schaufelrad (36) umfaßt.

8. Turbinenmeßgerät nach Anspruch 7, wobei der Meßeinsatz (32) durch strömungsrichtende Lamellen (33) axial im Meßgerätgehäuse angeordnet ist, wobei die Lamellen (33) als ein Ganzes mit dem Meßeinsatz (32) und dem zweiten Teil (3) des Meßgerätgehäuses gebildet sind, wobei der Meßeinsatz (32) vorzugsweise einen Lagerblock (37) für das Schaufelrad (36) umfaßt, wobei der Lagerblock (37) stromaufwärts des Schaufelrads (36) gelegen ist.

9. Turbinenmeßgerät nach Anspruch 7 oder 8, wobei das erste Teil (2) des Meßgerätgehäuses weiter einen Verdrängungskörper (24) umfaßt, welcher axial im Meßgerätgehäuse angeordnet ist, und welcher an einer stromaufwärts gelegenen Seite davon am Stromrichter (22) anschließt, und an einer stromabwärts gelegenen Seite davon am Meßeinsatz (32) anschließt, wobei der Verdrängungskörper (24) vorzugsweise nahe dem am Meßeinsatz (32) anschließenden Ende eine radial nach außen gerichtete Stufe (28) umfaßt, und wobei der Verdrängungskörper (24) vorzugsweise am Stromrichter (22) befestigt ist.

10. Turbinenmeßgerät nach einem der vorhergehenden Ansprüche, wobei eine axiale Länge (21) des ersten Teils (2) nahezu gleich ist an einer axialen Länge (22) des zweiten Teils (3) und wobei die Länge des zweiten Teils (3) des Meßgerätgehäuses vorzugsweise kleiner oder gleich ist am Diameter des Durchlasses des Rohrs (50,51).

11. Rohrleitungssystem umfassend ein Rohr (50) und ein Turbinenmeßgerät (1) zum Messen einer Strömung eines Fluidums in der Rohrleitung, wobei das Turbinenmeßgerät (1) ein Messergehäuse umfaßt, welches, in Axialrichtung des Meßgerätgehäuses betrachtet, ein erstes Teil (2) und ein zweites Teil (3) umfaßt, wobei das erste Teil im Rohr (50) eingeschoben ist und das zweite Teil (3) an seinem Umfang einen Mantel (31) umfaßt, welcher zwischen dem Rohr (50) und einem folgenden Rohr (51) gestellt ist für Anschluß und Dichtung der Rohrleitung.

12. Rohrleitungssystem nach Anspruch 11, wobei der Mantel (31) einen stromaufwärts gelegenen Umfangsrand (4) und einen stromabwärts gelegenen Umfangsrand (5) umfaßt, wobei der stromaufwärts gelegene Rand (4) mit einer erhöhten Dichtungsfläche (54) des Rohrs (50) verbunden ist und der stromabwärts gelegene Rand (5) mit einer erhöhten Dichtungsfläche (55) des folgenden Rohrs (51) verbunden ist, vorzugsweise über einen Dichtring (45,46).

## Revendications

1. Débitmètre à turbine (1) destiné à mesurer un débit d'un fluide dans un tuyau (50, 51), dans lequel le débitmètre à turbine (1) comporte un boîtier de débitmètre qui, vu dans la direction axiale du boîtier de débitmètre, comprend une première partie (2) et une deuxième partie (3), **caractérisé en ce que** la première partie (2) est conçue pour être insérée dans le tuyau (50) et la deuxième partie (3) comprend une enveloppe circonférentielle (31) à interposer entre un tuyau amont (50) et un tuyau aval (51) destinée à être raccordée de façon étanche au tuyau.

2. Débitmètre à turbine selon la revendication 1, dans lequel l'enveloppe (31) est conçue pour être raccordée à une face surélevée (54, 55) du tuyau (50, 51).

3. Débitmètre de turbine selon la revendication 1 ou 2, dans lequel le boîtier de débitmètre peut être divisé en la première partie (2) et la deuxième partie (3).

4. Débitmètre à turbine selon la revendication 3, dans lequel le boîtier de débitmètre comporte des moyens de placement (26, 41) ou des moyens de positionnement (23, 42) destinés à placer et/ou à positionner la première partie (2) et la deuxième partie (3) l'une par rapport à l'autre.

5. Débitmètre à turbine selon la revendication 3 ou 4, dans lequel la première partie (2) est pourvue d'une bride (26) orientée radialement vers l'extérieur pour raccorder la deuxième partie (3) qui fait face à la première partie (2) à un côté de l'enveloppe (31).

6. Débitmètre à turbine selon la revendication 5, dans lequel l'enveloppe (31) de la deuxième partie (3) présente, sur un côté (4) faisant face à la première partie (2), un creux concentrique (41) destiné à recevoir la bride (26) de la première partie (2), dans lequel la profondeur et la largeur du creux (41) sont de préférence pratiquement égales respectivement à l'épaisseur et à la largeur de la bride (26).

7. Débitmètre à turbine selon l'une quelconque des revendications précédentes, dans lequel la première partie (2) est pourvue, sur un côté intérieur, d'au moins une partie d'un directeur d'écoulement (22) et dans lequel la deuxième partie (3) est pourvue, sur un côté intérieur, d'un insert de mesure (32) comportant une roue à aubes (36).

8. Débitmètre à turbine selon la revendication 7, dans lequel l'insert de mesure (32) est placé axialement dans le boîtier de débitmètre au moyen de pales de direction de l'écoulement (33), dans lequel les pales (33) forment une unité avec l'insert de mesure (32) et la deuxième partie (3) du boîtier de débitmètre, dans lequel l'insert de mesure (32) comprend de préférence un bloc de palier (37) pour l'hélice (36), dans lequel le bloc de palier (37) est situé en amont de la roue à aubes (36).

9. Débitmètre à turbine selon la revendication 7 ou 8, dans lequel la première partie (2) du boîtier de débitmètre comprend un corps de déplacement (24) qui est placé axialement dans le boîtier de débitmètre, et qui est raccordé, par un côté amont, au directeur d'écoulement (22) et qui est raccordé, par un côté aval, à l'insert de mesure (32), dans lequel le corps de déplacement (24) comporte, de préférence près de l'extrémité se raccordant à l'insert de mesure (32), un épaulement (28) orienté radialement vers l'extérieur, et dans lequel le corps de déplacement (24) est de préférence fixé au directeur d'écoulement (22).

10. Débitmètre à turbine selon l'une quelconque des revendications précédentes, dans lequel une longueur axiale (L1) de la première partie (2) est pratiquement égale à la longueur axiale (L2) de la deuxième partie (3) et dans lequel la longueur de la deuxième partie (3) du boîtier de débitmètre est de préférence inférieure ou égale au diamètre du passage du tuyau (50, 51).

11. Ensemble de conduite comprenant un tuyau (50) et un débitmètre à turbine (1) pour mesurer le débit d'un fluide dans la conduite, dans lequel le débitmètre à turbine (1) comporte un boîtier de débitmètre qui, vu dans la direction axiale du boîtier de débitmètre, comprend une première partie (2) et une deuxième partie (3), dans lequel la première partie est insérée dans le tuyau (50) et la deuxième partie (3) présente à sa circonférence une enveloppe (31) qui est interposée entre le tuyau (50) et un tuyau suivant (51) en vue du raccordement étanche de la conduite.

12. Ensemble de conduite selon la revendication 11, dans lequel l'enveloppe (31) présente un bord amont circonférentiel (4) et un bord aval circonférentiel (5), dans lequel le bord amont (4) est relié à une face surélevée (54) du tuyau (50) et le bord aval (5) est relié à une face surélevée (55) du tuyau suivant (51), de préférence par l'intermédiaire d'un joint (45, 46).
